# EUROPEAN PATENT SPECIFICATION

(11) **EP 0 573 567 B1**
(45) Date of publication and mention of the grant of the patent: **17.05.2000**
(21) Application number: 92907710.5
(22) Date of filing: 25.02.1992
(51) Int. Cl.: G06K 7/10, G06K 17/00

(54) **HAND-HELD DATA CAPTURE SYSTEM WITH INTERCHANGEABLE MODULES AND INTERACTIVE CONTROL CIRCUITS**
TRAGBARES DATENERFASSUNGSSYSTEM MIT AUSTAUSCHBAREN MODULEN UND INTERAKTIVEN STEUERSCHALTUNGEN
SYSTEME DE SAISIE DE DONNEES PORTATIF AVEC MODULES INTERCHANGEABLES ET CIRCUITS DE COMMANDE INTERACTIFS

(30) Priority: 25.02.1991 US 660615; 12.02.1992 US 835718
(43) Date of publication of application: 15.12.1993
(73) Proprietor: NORAND CORPORATION, Cedar Rapids, IA 52401 (US)
(72) Inventor: KOENCK, Steven, E., Cedar Rapids, IA 52403 (US); MILLER, Phillip, Cedar Rapids, IA 52404 (US); HANSON, George, E., Cedar Rapids, IA 52405 (US); SCHULTZ, Darald, R., Cedar Rapids, IA 52403 (US); KRUNNFUSZ, Jeffrey, S., Cedar Rapids, IA 52403 (US)
(74) Representative: Read, Matthew Charles
(86) International application number: US9201461
(87) International publication number: WO9215073

(56) References cited:
- WO-A-90/16033
- US-A- 4 471 218
- US-A- 4 621 189
- US-A- 4 983 318
- US-A- 5 047 614

## Description

The present invention relates generally to data processing and communication devices and systems, particularly but not exclusively to systems using portable, hand-held data terminals for collecting, selectively processing and for communicating collected data to other system elements.

Typical operations range from manually controlled processes to automated collection processes. Manually controlled collection processes may include reading data and manually keying in such read data. Typical automated processes may include scanning indicia of information with a scanner, for example a bar code reader. Data collected by such terminals may become part of the data base of the system. Real time use of data collected by the data terminals may be implemented by communication interfaces within such data terminals.

Though host computers functioning as central processing stations of such data systems may control data bases and data flow, the hand-held data terminals are key elements for operating the data systems efficiently. Current data systems using hand-held data terminals have shown a correlation between the functionality of the hand-held data terminals and the overall effectiveness of the systems.

While progress has already been made in improving the efficiency and functionality of hand-held data terminals, there is nevertheless a continued need for improving hand-held data terminals which are readily adaptable to perform various functions and communicate with a variety of communications equipment.

For example, international publication no. WO90/16033 (PCT application no. PCT/US90/03282) discloses a hand-held data capture system with interchangeable modules, in which a wireless communications module can be removably mounted to a terminal, the terminal containing the processor circuitry required to interface to the communications module.

According to the present invention, there is provided a portable terminal device comprising a base module including first memory that stores a first control program, a first connector, and first processing circuitry that controls data applied to and received from the first connector in accordance with the first control program, and a removable communications device engagingly received by the base module and comprising a second connector and a wireless transceiver, characterised in that the removable communications device further comprises a second processing circuitry and, when the removable communications device is received by the base module, the second connector communicatively couples with the first connector, and the second processing circuitry and the wireless transceiver together manage transmissions of data received from the first processing circuitry via the first and second connectors in accordance with the first control program of the first processing circuitry.

According to the present invention, there is further provided a communications device adapted to be removably received by a base module so as to form a portable terminal device, the base module including first memory that stores a first control program, a first connector and first processing circuitry that controls data applied to and received from the first connector in accordance with the first control program, the removable communications device comprising a second connector and a wireless transceiver characterized in that communications device further comprises a second processing circuitry, arranged so that when the removable communications device is received by the base module, the second connector communicatively couples with the first connector, and the second processing circuitry and the wireless transceiver together manage transmissions of data received from the first processing circuitry via the first and second connectors in accordance with the first control program of the first processing circuitry.

The portable terminal device or communications device may include data collection circuitry, which may comprise code reading circuitry. This circuitry may be disposed in the communications device.

The first control program may provide a common interface to any of a plurality of differing types of removable communications device receivable by the base module.

The removable communications device may comprise a spread spectrum transmitter.

According to the present invention, there is also provided a data communications system comprising a base module, comprising first processing circuitry, a first connector and a first memory that stores base module communications software, and a plurality of communications modules interchangeably couplable to the base module, each communications module comprising a second connector and at least one of a plurality of wireless transceivers of different types, said base module receiving a selected one of the plurality of communications modules in an engaging position that communicatively couples the first and second connectors enabling the base module to communicate via the selected communications module; characterized in that each communications module further comprises second processing circuitry and a second memory that stores communications module software, wherein the second processing circuitry, using the communications module software, and the first processing circuitry, using the base module communications software, supports communication of data via at least one of the plurality of wireless transceivers regardless of which of the plurality of communications modules is selected.

The first processing circuitry may comprise a first microprocessor and may include a second microprocessor. The second processor may activate the first processor to perform data processing operations, and the first and second processors may operate at different clock rates. Alternatively, the second processing circuitry may comprise a second microprocessor.

Embodiments of the invention will now be described, by way of example, with reference to the accompanying drawings, in which:
FIG. 1 shows a frontal view of a modular data terminal and showing a frontal or upward directed face of the data terminal, as it would typically face an operator of the data terminal;
FIG. 2 is a side view of the data terminal shown in FIG. 1;
FIG. 3 is a side view of an alternate data terminal in accordance with the invention, a particular provision in accordance with certain features of the invention for engaging and disengaging a data and communications module with respect to a base module being illustrated;
FIG. 4 is a side view of an alternate data terminal in accordance with the invention showing particular features relating to a data and communications module in combination with a base module, such features relating to the data and communications module having an RF communications provision and a data scanning provision and including further a pivotal antenna, all in accordance with the invention;
FIG. 5 is an exploded view of a pivot joint of an antenna in accordance with a particular aspect of the present invention;
FIG. 6 is a sectional view of the antenna pivot joint shown in FIG. 5;
FIG. 7 is a partial pictorial view of an upper portion of a data terminal in accordance with the invention, showing in particular a data and communications module having telephone connector plugs for interfacing the data and communications module with telephone communications lines;
FIG. 8 is a schematic diagram of functional blocks for illustrating contemplated major functional elements of a base module and a respective data and communications module of a data terminal in accordance with the invention;
FIG. 9 is a schematic diagram of functional blocks for illustrating the major functional elements shown in FIG. 8 and for illustrating the function of emulating the interface function required by an interface circuit communicating between non-compatible communications functions of the communications or data collection functions of the data and communications module and the base module;
FIG. 10 is a schematic diagram of functional blocks representing a particular embodiment of the invention showing a spread spectrum radio communication module interacting with the base module which is modified and includes a preferred power saving microprocessor circuit;
FIG. 11 is a schematic diagram of major functional elements and their interaction of a particular embodiment of the base module including the power saving microprocessor circuit in accordance with the invention;
FIG. 12 is a schematic diagram showing typical, frequency related current characteristics of a first microprocessor element of the circuit shown in FIG. 11;
FIG. 13 is a schematic diagram showing frequency related current characteristics of a second microprocessor element of the circuit shown in FIG. 11;
FIG. 14 is a schematic block diagram showing functions allocated to each of the microprocessor elements or devices shown in FIG. 11; and
FIG. 15 is a flow diagram showing a desired functional interaction of the two microprocessor devices in FIG. 11 in accordance with the invention.

### Detailed Description of the Invention

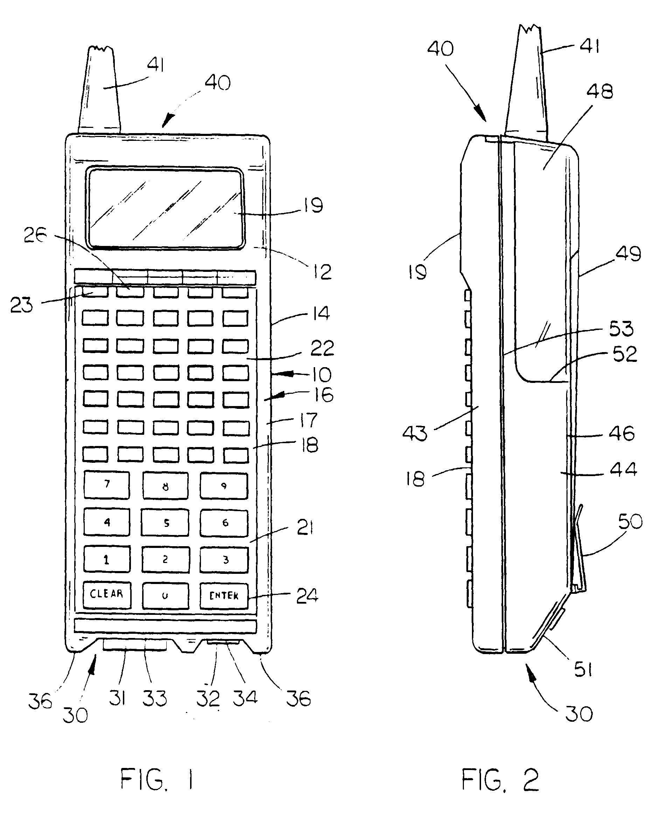

Referring now to FIGS. 1 and 2, a data collection terminal unit, also referred to herein as data terminal, is designated generally by the numeral 10. As shown in FIG. 1, a frontal face 12 of an elongate housing 14 of a base module 16 of the data terminal 10 typical faces upward and is accessible to the user of the data terminal. The upward facing portion of the module 16 houses a keyboard module 17, including an alphanumerical keyboard 18 and a display screen 19. The display screen 19 is in a preferred embodiment described herein a 4-line by 16-character Reflective Super Twist Liquid Crystal Display (LCD). Of course, other display means may be used in its stead. The keyboard 18 includes a lower, standard numerical keyboard section 21, above which is disposed an alphabetical keyboard arrangement 22. An On-Off power key 23 is preferably placed in a leftmost position of an uppermost row on an uppermost row of five keys. The outermost keys 24 in a bottom row are configured as "CLEAR" and "ENTER", while the remaining four keys in the uppermost row are preferably configured as a set of four user-defined function keys 26.

At a bottom end 30 of the housing 14, there are located two connector plugs 31 and 32 in recesses 33 and 34, respectively. Inasmuch as the connectors 31 and 32 are disposed in the recesses, adjacent end and interleaved protrusions 36 of the housing 14 extend somewhat past the connectors to protect the connectors from damage should the data terminal accidentally be dropped or set down on the bottom end 30. A preferred embodiment of the data terminal 10 is intended to withstand without damage a drop of about 1.2 meters to a solid surface, such as concrete. The preferred connector 31 is an input-output port, as may be used for such data collection as bar code reading, for example. In such instance, the connector 31 is preferred to be a 9-pin D-subminiature connector with pins interfacing to typical 5 volt scanning peripherals. The connector 32 may be used for accessing external power sources or provide of combined power and data communication. A circular miniature DIN-type connector 32 may be used in the preferred embodiment. A top end 40 of the preferred embodiment of the base module 16 typically may not include connectors. An antenna 41 shown to extend above the top end 40 is further described in reference to FIG. 2.

FIG. 2 is a side view of a data terminal 10 of FIG. 1. The base module 16 of the data terminal 10 includes an elongate upper housing portion 43 and a battery compartment 44 attached to the upper housing portion 43 adjacent the bottom end 30. In the preferred embodiment, the battery compartment 44 is assembled as a lower housing portion to the upper housing portion 43 and is equipped with a battery compartment door 46 which may be locked to seal an opening of the battery compartment 44. Adjacent the top end 40 of the data terminal 10 a data and communications module 48 is attached to the lower edge of the upper housing portion 43. The antenna 41 extends upward from the data and communications module 48 above the top end 40 of the data terminal 10. An elastic hand strap 49 is attached to the underside of the data terminal 10. A belt clip 50 may conveniently be mounted to the hand strap 49, allowing the data terminal to be carried on a user's belt. The elastic hand strap is attached adjacent the top end of the data terminal to the underside of the data and communications module 48 and adjacent the bottom end 30 to a sloped lower surface of the battery compartment 46.

One of the features of hand-held data terminals as disclosed herein and in the PCT application PCT/US90/03282 relates to the exchangeability of modules of different shape and varied function. The data and communications module 48 in FIG. 2 may for example include a radio module which is externally identified by the antenna 41. The radio module may be a commercially available pretuned 1-watt (UHF) frequency modulated (FM) radio transceiver module, or any similar radio module, such as a Motorola P10™ radio model, for example.

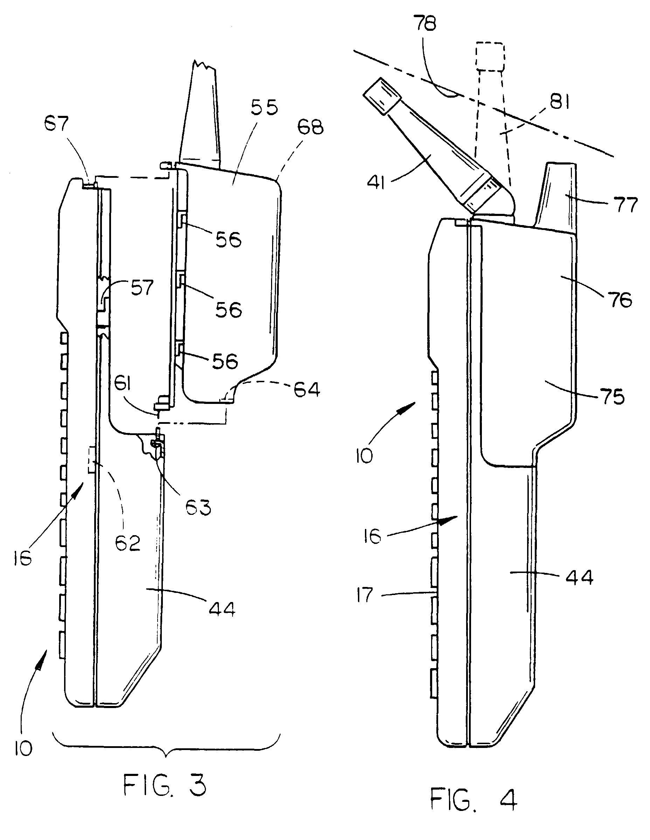

In accordance herewith it is contemplated to provide the data and communications module 48 as a module which is readily replaceable with another data and communications module. Each such module will feature a quick exchange mounting mechanism, such as is more clearly illustrated with respect to FIG. 3, and any of a number of features packaged in one of a number of compatible data and communications modules. When mounted, the module, such as the data and communications module 48 is matched in a contour continuation along a juncture 52 to the adjacent edge of the battery compartment 44 and along a longitudinal parting line 53 of the base module 16. For example, the data and communications module 48 is sized to include the described radio frequency transceiver module, as indicated by the antenna 41. Other data and communications modules may include a similar radio frequency transceiver module and may include additional memory capacity to function with the base module 16. Various combinations of features are contemplated in accordance herewith.

FIG. 3 shows the base module 16 and substantially in a ready position to become mounted to the base module 16 is a data and communications module designated generally by the numeral 55. The data and communications module 55 is shown to represent generally a number of such data and communications modules which may be desirably incorporated into a communications system in accordance with the invention. It may be noted that the data and communications module 55 is shown in FIG. 3 as being of somewhat relatively greater depth or thickness than the data and communications module 48 described with respect to FIG. 2. The change in outer dimensions illustrates that a number of modules of various depth are adapted to match with mounting provisions to attach the respective data and communications module 55 to the base module 16.

The data and communications module 55, as a representative module featuring the attachment to the base module 16 has a plurality of laterally disposed latching hooks or latch hooks 56 which become engaged by respective latching seats or latch seats 57 disposed along the adjacent edge of the base module 16 when the module 55 is moved toward and into engagement with the adjacent edge and then toward the battery compartment 44, as shown by the arrow. Electrical communication is established via a power and communications connector 61 the pins of which engage a mating connector socket 62 within the base module 16. A set of screws 63 may be tightened through the battery compartment 44 into a set of threaded seats 64 disposed in the adjacent wall of the module 55 to securely retain the attached module as an integrated part of the data terminal 10. At the top end of the data terminal 10, a lip or extending stop edge 66 of the module 55 engages a complementarily shaped seat 67 at the top end of the base module 16 to securely interlock the data and communications module 55 with the base module 16.

It is contemplated, for example, for the module 55 to include any of a number of combinations of diverse functional elements. For example, the module 55 may include the aforementioned transceiver, though the antenna 41 may be attached externally as shown in FIG. 2 or might be provided internally, in addition to extended data memory capacity, a modem or a reader of indicia of information may be included, such as a bar code reader, or a shelf tag reader. Shelf tag systems are known in which so-called "shelf tags" contain means for programming information into small display devices which are attached to front edges of merchandise storage shelves. The devices or tags would then retain the programmed data which may be acquired by the reader in the data and communication module 55, for example. Information may be communicated between the shelf tag and the data terminal 10 by various means including radio frequency or optical transmission. Information may be communicated via optical readers in the data and communications terminal 16 as read from liquid crystals, or by other communication such as infra red optical, or low power RF data messages.

FIG. 4 shows an alternate embodiment of the data terminal 10 in which the data terminal includes a data and communications module which includes, for example, a radio frequency transceiver module 75 and a CCD scanner module which may be disposed in a lower portion of the module 75 at 76, having a scanning window at 77. Since it may be desirable to position the scanning window near a surface at which data indicia such as bar code labels may be located, as indicated at 78, the antenna which also protrudes from the top end of the data terminal 10 is found to be interfering when disposed in a normally protruding position. It is therefore contemplated to arrange the antenna 41 in a manner in which it may be pivoted from an upwardly protruding position, such as shown in phantom lines at 81 to a tilted position such as shown by the antenna 41.

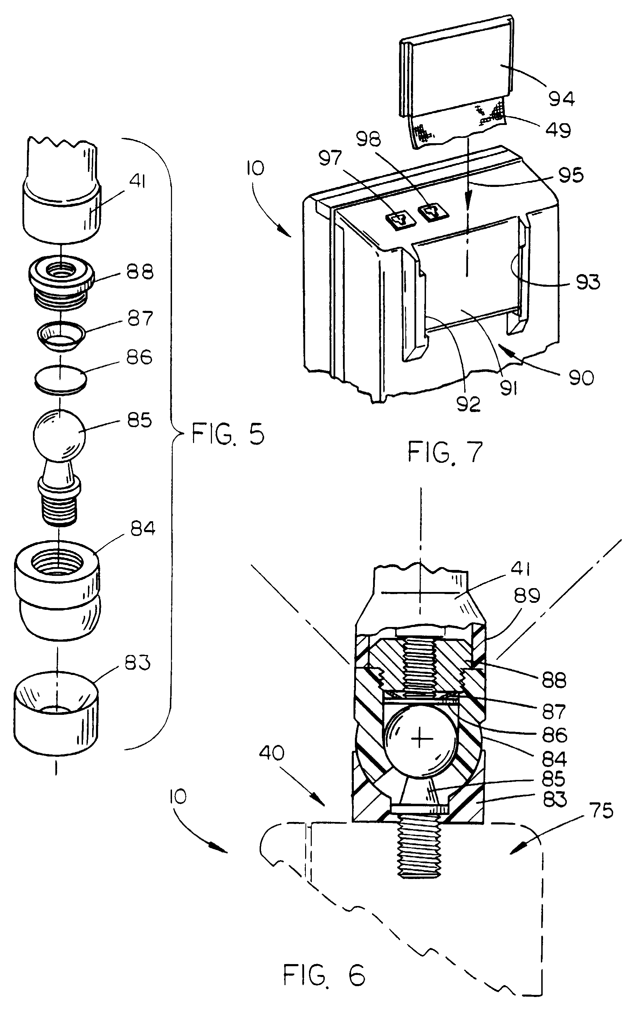

In reference to FIGS. 5 and 6, there is shown a pivotal joint which experiences little signal degradation when pivoted from such upwardly extended position to the tilted position in which the scanner window may be brought into proximity of a bar code label, for example, as described. The pivotal antenna joint includes a pivot base or pivot socket 83 into a hollow cup of which fits a pivot ball 84. Both the pivot socket 83 and the pivot ball 84 are of RF dielectric to prevent radio frequency burns of a person touching the antenna when the associated radio transceiver is transmitting. The pivot socket 83 is mounted against an outer wall of the module, such as the module 48, 55 or 75 by an antenna swivel post 85. The swivel post 85 includes a spherical top against which rests a pivot washer 86. The pivot washer is in turn urged into contact with the top of the swivel post by a cupped spring washer 87, also at times referred to as Belville washer. The urging force against the spring washer 87 is provided by a doubly-threaded antenna mounting bushing 88. An external thread of the bushing 88 screws into an upper opening of the pivot ball 84 to complete the pivot joint of the antenna. The antenna 41 screws with its base into the internal threads of the mounting bushing 88. As shown in FIG. 6, a lower dielectric skirt 89 of the antenna 41 extends downward over the outer edge of the bushing, which is of metal, to prevent exposure of the bushing. It should be understood that variations in the pivot joint may be possible within the scope of the invention.

FIG. 7 shows another embodiment and further features of the invention as described herein. The elastic strap 49 may be permanently attached adjacent the bottom end of the data terminal 10 as described herein above. At an upper end, however, the elastic strap may be attached to the exchangeable data and communications modules, such as a module 90 depicted in FIG. 7. In that the modules are exchangeable and in an effort to facilitate a quick replacement of one module for another, the hand strap is attached to the module 90 by a guide structure 91 including left and right hand spaced guide tracks 92 and 93 which receive a guide bracket 94 attached to the upper end of the hand strap 49. To attach the upper end of the hand strap 49 the elastic hand strap is stretched beyond its normal tensioned stretched length and the guide bracket 94 is inserted into an uppermost opening between the guide tracks 92 and 93. The tension of the hand strap 49 pulls the bracket 94 into the space between the guide tracks 92 and 93 in the direction of the arrow 95. The insertion of the bracket 94 securely captures the strap 49 at its upper end. To remove the hand strap at its upper point of attachment, the bracket is simply pulled out of the uppermost opening between the two spaced guide tracks 92 and 93. The embodiment of the data and communications module 90 further shows typical telephone connector jacks 97 and 98 indicating that the module contains a typical modem unit for communication over standard telephone lines. The modem unit as shown by connectors 97, 98 in the module 90 may be supplemented by memory for data storage prior to communication by the modem. In this manner the data terminal may be used in a batch process mode, data being transmitted at times and occasions convenient for telephone hook-up. Modem connections may also take on more significance in that the data terminal may be coupled to a typical cellular telephone unit which in turn can communicate via standard telephone communication networks over vast areas. In the latter mode batch transfer of data may still be desirable, though the need for substantial data storage capacity may be reduced.

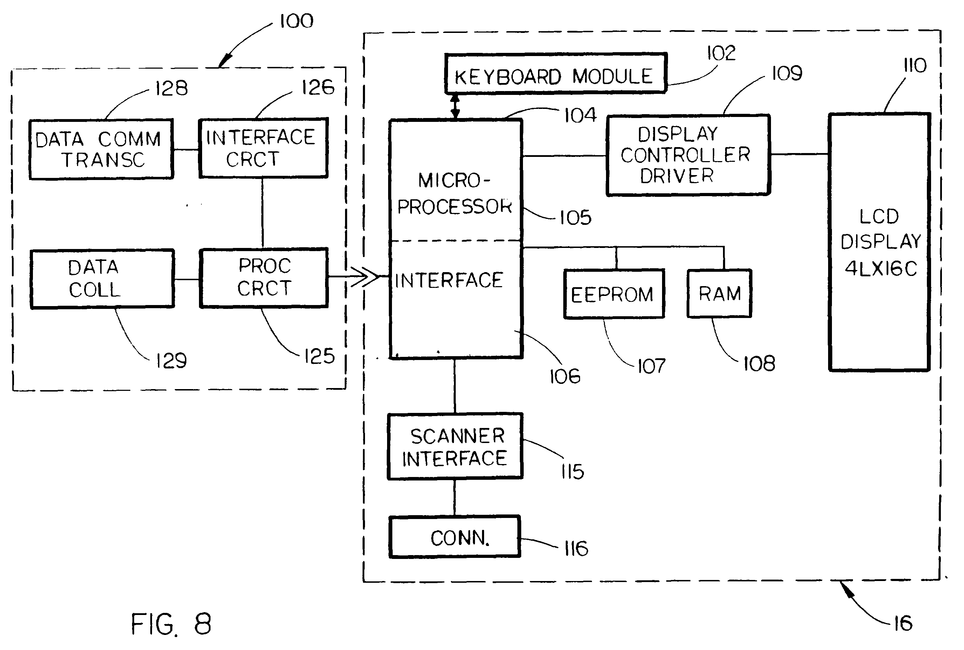

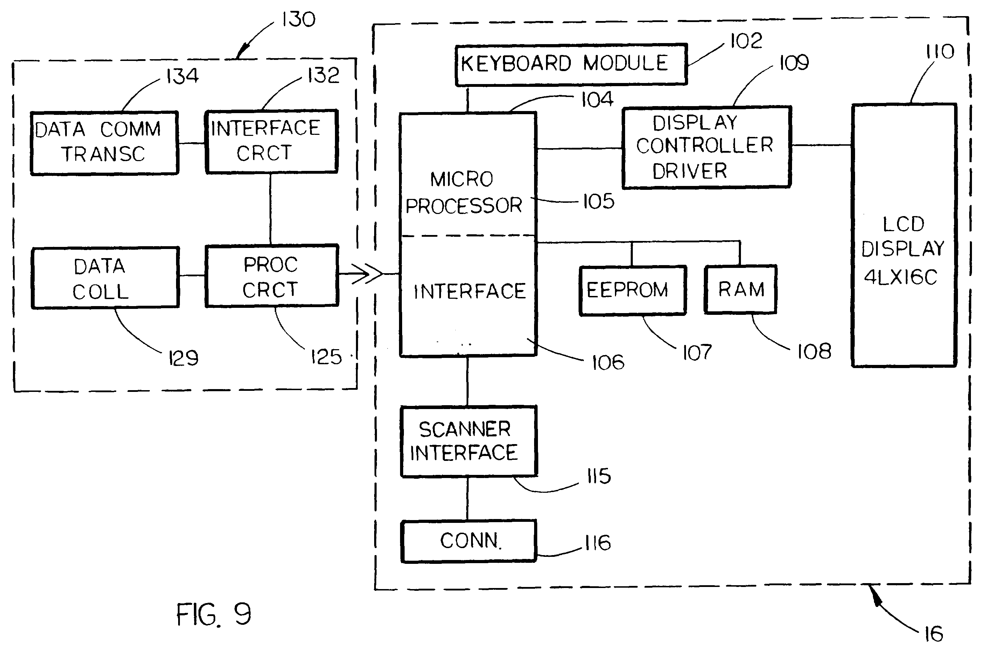

FIGS. 8 and 9 illustrate a microprocessor controlled data transfer between the base module 16 and any of a number of data and communication modules which may include various data collection and data communication transceivers including complex radios such as a spread spectrum radio or such a modem for telephone transmission of data. Though not expressly described, it is understood that the hand-held data terminal 10 as described herein and all of its circuits, including those of attached modules are powered by a battery or power source which occupies the space of the battery compartment 44 as described herein. FIG. 8 shows a block diagram of functions of the base module 16 and a typical data and communications module designated generally by the numeral 100. The base module is operative in conjunction with a typical radio frequency transceiver provided by the data and communication module 100, for example. The base module 16 includes a typical keyboard module 102 interactively coupled to a microprocessor 104. A preferred microprocessor is a 80C196KC device which is a 16-bit microcontroller 105 with on-chip masked ROM, RAM and built-in timers, ports, analog to digital converters and a serial interface 106. Thus, the microprocessor functions as a microcontroller and as an interface for communicating data and control signals to and from the base module 16. In addition to the on-chip memory capacity, an external ROM 107 and an external RAM may be provided for additional data processing and communication capacity. Display controller and driver circuits 109 may be multi-chip circuits or may be integrated into a single device to drive the described LCD screen 110. The driver circuit is controlled by the microprocessor 104 either by direct link or via a general data bus, such as data bus 111. A typical scanner interface 115 is coupled to a 9-pin connector 116, such as the referred to D-subminiature connector which may couple a laser scanner or CCD scanner to the base module 16 for data collection.

The data and communication module 100 is of particular interest in that an improved interfacing may be obtained by coupling communication between the data and communication module 100 and the base module 16 through a microprocessor 125, such as, for example an 80C51 microprocessor circuit. Typical on board ROM allows the microprocessor to be programmed to interact with a number of devices in accordance with the stored program. The microprocessor interacts with an interface circuit 126 which may be an analog or mixed analog and digital interface circuit. The program for interacting with the interface circuit 126 may also be stored within a ROM of the interface circuit 126. The interface circuit 126 is coupled to a transceiver module 128. The microprocessor 125 may also be coupled directly to a data collection interface 129 to receive data from a scanner for reading any number of different bar codes or for providing input data from other external sources. The operation of the microprocessor 125 for coupling data to the base module 16 allows various input patterns to be processed by any of specific operational protocols controlled by the microprocessor 125, such that the data input from the data collection circuit can be made the same from any of a number of devices. Also with respect to the operation of the transceiver, in that the program for operating the microprocessor 125 may include particular address codes for data retrieval and data communication via the transceiver, the data sent via a data and control bus between the microprocessors 125 and 104 can emulate a uniform data transfer protocol to the base module 16. The simplification resulting from the microprocessor 125 increases the number of communications devices that may be represented by the data communication transceiver circuit or module.

Referring now to FIG. 9, the base module 16 is shown as being coupled to a different data and communications module designated generally by the numeral 130 in which the interface circuit 126 shown in FIG. 8 has been replaced with an interface circuit 132 and the transceiver 128 in FIG. 8 has been replaced by a transceiver circuit 134. The transceiver 134 may for example be a complex radio, such as a spread spectrum radio in lieu of an FM transceiver, as represented, for example, by the block identified at 128 in FIG. 8. However, the program function represented by the interface circuit 132 and interacting with the microprocessor 125 permits the interactive control and data stream between the base module 16 and the data and communication module 130 to be emulated to appear to the base module 16 as being the same as the simple FM transceiver module. The reference to the particular microprocessor circuit types in the base module and in the base module 16 and in the communication module 100 or 130 are given as illustrative examples and should not be considered as limiting to the scope of the invention. The data collection interface 129 is considered optional and may not form part of the communication modules 100 or 130 when the communication module does not include a scanner module, such as indicated at 76 in FIG. 4. In either case the microprocessors 104 and 125 interact, each controlling the environment of its respective submodule, such as the base module 16 or the data and communication module 130, to enhance data exchange between the modules.

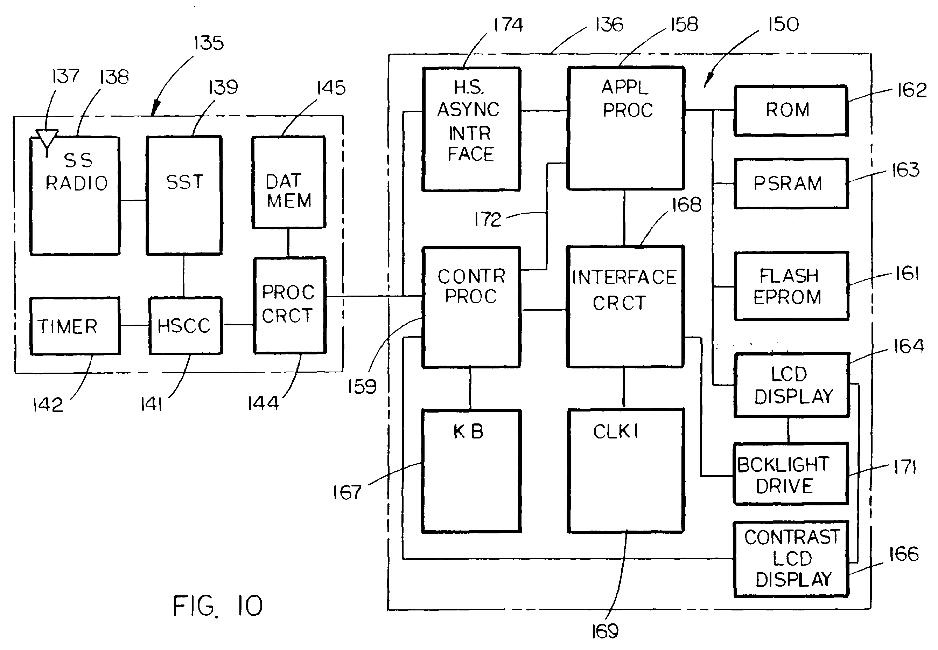

FIG. 10 shows a communication module 135 communicatively coupled to a base module 136. The base module 136 may be structurally similar or identical to the described base module 16, the electrical control functions and circuits include certain power saving functions and circuits as further described with respect to FIGS. 10 through 15. The communication module 135 is a preferred spread spectrum radio module. Spread spectrum radio transmission and receiver functions are shown with a symbolic antenna 137 as a single transceiver 138 ("SS RADIO"). Spread spectrum radio technology is well known in the art as permitting high binary data rate transmissions which are propagated over a selected channel frequency within an assigned 902 to 928 Mhz commercial frequency band. Spread spectrum communication may use a pseudo-noise encoding mechanism according to which data are encoded, transmitted, received and decoded at respective transmitting and receiving stations. Both the transmitting and the receiving station must of course employ identical encoding and decoding algorithms. The encoding and decoding function is shown as a spread spectrum radio modem circuit 139 ("SST"), an integrated circuit device which might well be considered an integral element of the spread spectrum radio unit. Spread spectrum radio transmissions are capable of encoding, decoding and transmitting binary data messages at relatively high rates in comparison to other data transmission rates. While state of the art facsimile transmissions and typical FM radio transmissions may take place at signalling rates of 9600 baud or bits per second, in a preferred embodiment a spread spectrum binary transmission rate is 192 thousand bits per second. A transmitted message includes of course besides data bits various control and error checking bits. Outgoing messages are modulated and incoming messages are demodulated by the modem circuit 139 and are communicated as synchronous demodulated serial messages between the modem circuit 139 and a high level serial communication controller 141 ("HSCC"). A timing function circuit 142 ("TIMER") is shown as being coupled to the communication controller 141. It is to be understood, however, that the timer 142 is also functionally coupled to the circuit 139 and further provides timing signals to operate a radio module microprocessor circuit 144 ("PROC CRCT.") and an associated external memory circuit 145 ("DAT MEM").

The serial communication controller 141 performs control functions on data messages, such as error detection and correction, and converts data messages from synchronous serial to parallel binary data. The controller operates under a known communication protocol referred to a High level Data Link Control or HDLC. Data are communicated between the serial communication controller 141 and the microprocessor circuit 144 in a synchronous parallel data format. The microprocessor circuit 144 receives and temporarily stores received data in a typical memory circuit represented by memory circuit 145. Data are then communicated by the microprocessor 144 as high speed asynchronous data communication messages between the communication module 135 and the base module 136. The microprocessor 144 is preferably an H8 type microprocessor which includes on-board memory in the form of both ROM and RAM circuits. The on-board memory stores the communication control instructions by which the microprocessor 144 communicates with the respective data circuits in the base module 136. However, to adequately support temporary storage of data messages to relay them as either synchronous or asynchronous communication messages between the modules 135 and 136, the memory circuit 145 externally of and in addition to the on-board memory is available to the microprocessor 144.

The circuit functions in the base module 136 of FIG. 10 depict a power-conserving microprocessor control circuit 150 which includes a combination of two microprocessor elements 158 and 159. The microprocessor elements 158 and 159, individually capable of functioning independently of each other are coupled to interact as a functional control unit to conserve power when compared with a conventional microprocessor controlled circuit. The microprocessor 158 which is referred to as application processor 158 is applied to perform data processing and data manipulation operations of the data terminal 10. The second microprocessor 159 is referred to as a control processor 159. The application processor 158 operates faster than the control processor 159 but also consumes more power. However, to conserve power in the combined operation of the two processor elements 158 and 159, the application processor becomes deactivated after completion of any data processing task. Since data storage and screen display of data are memory intensive functions of the application processor 158, the processor 158 is coupled to a full complement of memory including programmable read only memory 161 ("FLASH EPROM"), permanent memory 162 and random access memory 163 ("PSRAM"). Though the application processor 158 updates a screen display 164 ("LCD DISPLAY"), the control processor 159 controls a contrast adjustment 166 ("CONTRAST LCD DISPLAY"), the commands for which may be received from an operator through a keyboard 167 ("KB"). Data and control characters are communicated between the application and control processors 158 and 159 via an interface circuit 168 ("INTRFACE CRCT"). The interface circuit may be an integrated circuit which further includes functions for applying respective clocking signals from a clocking signal source 169 ("CLK1") to the microprocessors 158 and 159. The interface circuit also may include functions such as the control of an EL panel backlight drive 171 ("BCKLIGHT DRIVE").

Since the application processor 158 becomes deactivated upon completion of a data processing task, the control processor 159 functions to reactivate the application processor 158 upon occurrence of an event that necessitates data processing or manipulation. Such activation is preferably provided by a direct connection between the two processors 158 and 159 as shown at 172. High speed data transfer between the communication module 135 and the base module 136 of the data terminal 10 are preferred to take place directly between the microprocessor 144 of the communication module 135 and the application processor 158 via a high speed asynchronous communication interface circuit 174 ("HS ASYNC INTR FACE"). In a preferred data receiving operation the microprocessor 144 would prompt the control processor 159 to reactivate the application processor 158 to receive incoming data through the interface circuit 174. Reactivation of the application processor 158 for an outgoing message may be prompted by an operator from the keyboard 167.

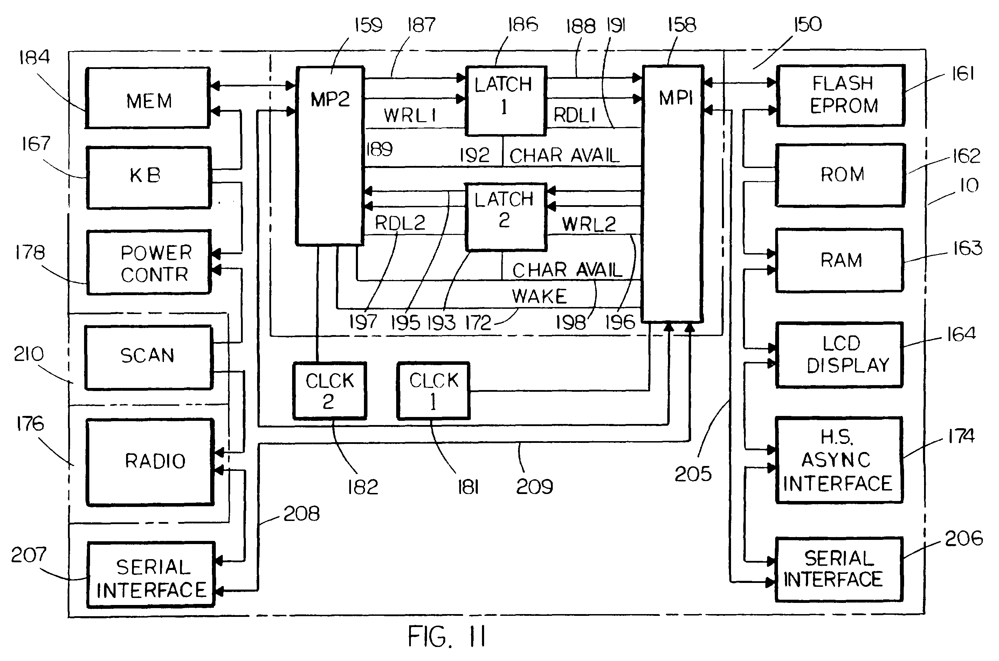

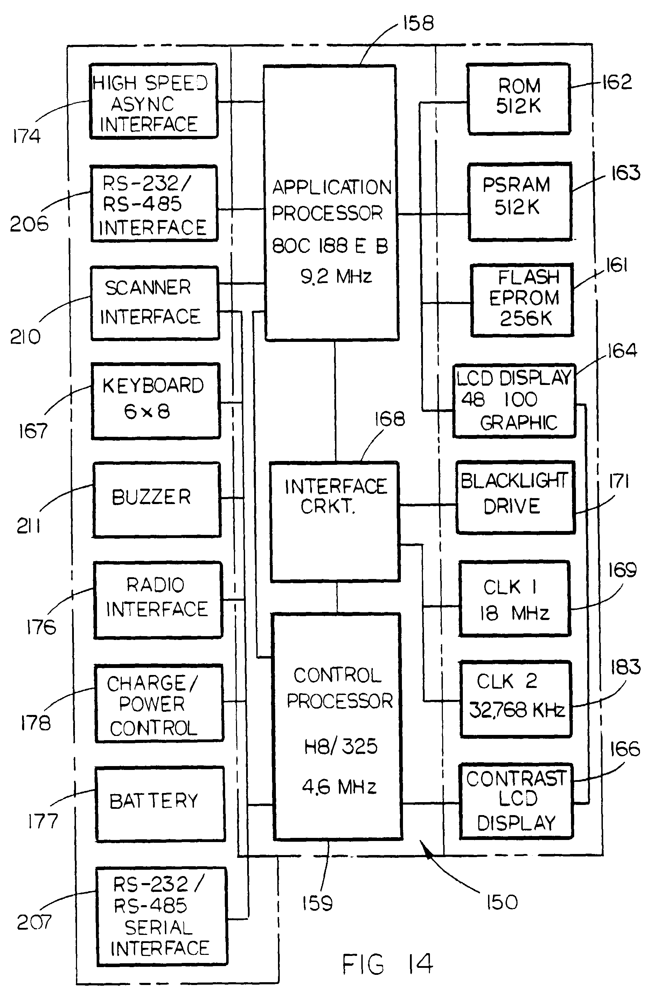

Referring to FIG. 11, the schematic diagram shows major functional logic and communications elements of the power-conserving microprocessor circuit 150 which may be controlling the operations of, or be functional in the operation of, the hand-held, portable data terminal 10, schematically identified by encompassing box. The data terminal 10 may interact in particular with one or more temporarily attached or integrated peripheral communication devices or modules, such as a transceiver communication module ("RADIO"), shown at 176. The communication module may be a standard FM transceiver adapted for digital data communication, or it may be the spread spectrum communication module 135 described with respect to FIG. 10. The data terminal 10 of the described example being portable, the physical circuits of the functional devices shown in FIG. 11 typically would be powered by a battery 177 (shown schematically in FIG. 14) which is included in the power management function 178 ("POWER CONTR"). The microprocessor operated control circuit 150 comprises, as referred to with respect to FIG. 10, a combination of two circuit portions which include specifically the two microprocessor type subcircuits 158 and 159. Each of these subcircuits 158 or 159 are separately functioning microprocessor blocks, modules or separate microprocessor devices. In reference to FIG. 11 the devices are respectively the application processor 158 ("MP1") and the control processor 159 ("MP2"). It is advantageous to perform data processing operations at a comparatively high speed and with a more powerful processor than would be desirable for relatively less complex control functions.

The term "data processing operation" is used herein in the sense of manipulating a series of binary codes according to programmed instructions to arrive at a desired result. Because of the great number of discrete binary operations required to perform many of the most common data processing functions, higher processor speeds and more complex or powerful microprocessor circuits of those typically available are more desirable for data processing operations.

A characteristic of more powerful microprocessor devices and those operating at higher speeds is that these devices also consume more power. However, in accordance herewith, the power consumption of a microprocessor circuit may be limited as further described. For example, in the preferred embodiment, the application processor or data processing processor device 158 is an "Intel 80C188EB" device which is "16-Bit" microprocessor device, operated at a preferred speed of 9.2 megahertz (MHz). At such preferred clocking speed of 9.2 MHz, the power consumption or operating current consumed by the data processing microprocessor device 158 is approximately 55 milliamps ("mA"). The control processor 159 is in a preferred implementation a "Hitachi H8/325" device which is an "8-Bit" microprocessor, operated at a preferred speed of one-half of the speed of the data processing microprocessor 158, or 4.6 MHz. Because of the smaller physical size of the control processor 159 and the slower, preferred clocking speed, the power consumption or current required by the control processor 159 in its operational mode is only about 9 mA, hence less than one-fifth of the power consumed by the processor 158. Because of continuous advances in the field of microprocessors over the past decade, it is to be expected that in the future other microprocessors will be marketed which will meet or exceed the requirements of the presently preferred microprocessors and that these microprocessors also may operate in accordance herewith. In general, the control microprocessor circuit or the control microprocessor 159 desirably operates at a slower and less power consuming speed than the application microprocessor circuit or the application microprocessor 158. A one-to-two speed ratio for driving the respective microprocessors 159 and 158 is preferably chosen because of the power savings that are being realized with respect to the portable data terminal 10. Respective clocking circuits 181 and 182 ("CLCK 1 and CLCK 2") are shown as providing respective timing signal ports coupled to the respective processors 158 and 159 to drive the processors at the desired speeds as described.

Also, a functional arrangement of the separate clocking circuits 181 and 182 preferably may be replaced by the single crystal oscillator circuit 169 ("CLK 1") which is then coupled through the interface circuit 168 ("INTERFACE CRCT") to both processors 158 and 159 as shown in FIG. 14. The interface circuit 168 would include in such coupling arrangement a typical divide-by-two timing circuit function. An original 9.2 MHz clocking signal port and a signal port with the divided by two signal, comparable to the clocks or timing signal ports 181 and 182, would be coupled to the respective timing signal input ports of the processors 158 and 159, respectively, to drive the processors 158 and 159 at their respective speeds of 9.2 and 4.6 MHz. A second clock 183 ("CLK 2") shown in FIG. 14 may provide what is referred to as "real time" timing functions such as actual time and date information.

As will become apparent from the further description, it is within the scope of the invention to integrate the distinct functions and operational characteristics of the separately identified microprocessor devices 158 and 159 into a single integrated device. The resulting integrated device 150 desirably includes respective interface functions as are further described herein to implement the power-saving characteristics realized by the presently preferred embodiment of the control circuit 150. Within such integrated device 150, the function of the application processor 158 is then performed by a first microprocessor circuit block or circuit portion, and the function of the control processor 159 is performed by a second microprocessor circuit block or circuit portion. These circuit blocks, portions or modules interact essentially in the same manner within the circuit 150 as the currently used microprocessor devices 158 and 159.

The preferred control processor 159 includes in its commercial implementation in addition to typical microprocessor registers and an arithmetic logic unit such functional circuit blocks as ROM, RAM and communications ports. These circuit blocks may also be included in any integrated device 150, or their functions may be supplied by peripheral devices. As shown in FIG. 11, additional external memory 184 ("MEM") may optionally be provided to supplement such on-board memory 185 ("OM"), though for typical operations as further described herein, the external memory device 184 is not required. According to a preferred embodiment, data communication between the processors 158 and 159 occurs via an interface circuit including, for example, two 8-bit data registers or latches described in greater detail with respect to the further description relating to FIG. 11. It is to be understood, however, that the control processor 159 may have a direct bus interface provision and become directly coupled to the application processor 158, the coupled processors 158 and 159 thereby being capable of bidirectionally passing data and control signals without the described two 8-bit data registers or latches. The interface circuit 168 shown in FIG. 14 should be understood to not only include the clocking signal coupling circuits to drive the respective application processor 158 and the control processor 159, but to further include the data interface or bus to permit the desired bidirectional data and control code communication between the processors 158 and 159 as further described herein. In further reference to FIG. 14, an integration of the processor devices 158 and 159 into a single device desirably may include the interface circuit 168 as an integral part of the integrated circuit 150.

Referring again to FIG. 11, a first latch 186 ("LATCH 1") of the two latches is coupled through an 8-line parallel bus 187 to the microprocessor 159 and through a similar bus 188 to the microprocessor 158. Respective write and read lines 189 and 191 ("WRL1 and RDL2") provide respective control or trigger signals for the processor 159 to write data into the first latch 186 and for the processor 158 to read data from the latch 186. A handshake or control signal line 192 ("CHAR AVAIL 1") toggles between a high or "logical 1" to indicate to the processor 158 that data have been read into the first latch 186 by the processor 159 and a "logic 0" to signal that the processor has read or taken the data from the first latch 186. A second latch 193 ("LATCH 2") similarly stores an 8-bit data element written into the second latch 193 by the processor 158 over a second write 8-bit write bus 194. A second read bus 195 transfers the data element stored in the second latch 193 from the latch to the second processor 159. The control or trigger signals for writing into or reading from the second data latch 193 are provided over trigger lines 196 and 197 ("WRL2 and RDL2"), respectively. A second handshake or control signal line 198 ("CHAR AVAIL 2") coupled to the second latch 193 and to the processors 158 and 159 also toggles between high and low signal states to indicate in the high state the availability of data in the second latch 193 and in the low state the completion of a read operation of the most recent data element by the control processor 159.

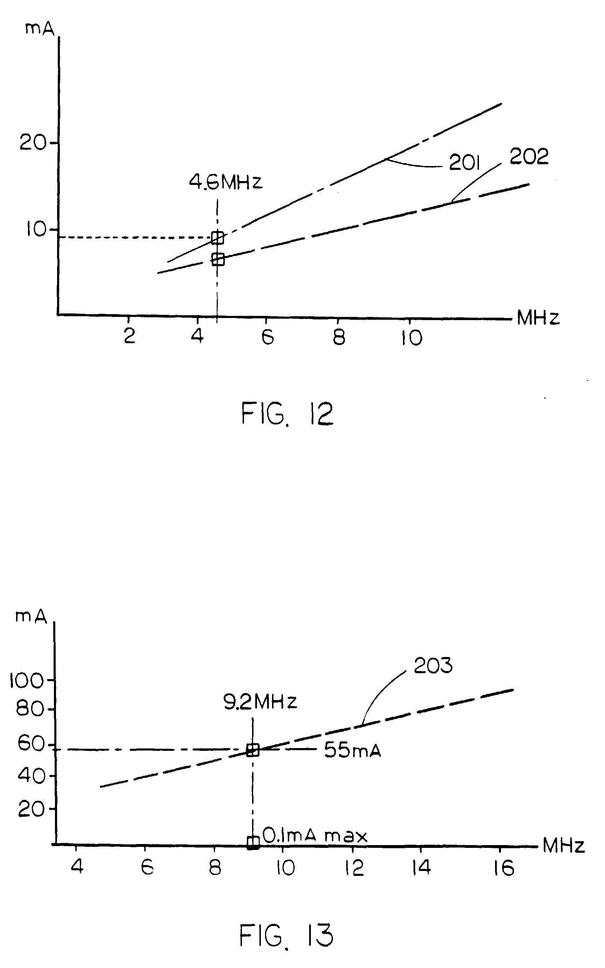

The control signal line 172, referred to with respect to FIG. 10, carries a control signal generated by the control processor 159, by which the control processor 159 controls the duty cycle of the application processor 158. In reference to FIGS. 12 and 13, the current usage and respective power consumption of the control processor 159 ranges between a typical operating mode and a typical "idle mode" at the preferred frequency of 4.6 MHz between a high of 9 and a low of about 7 mA, as shown in FIG. 12 by graphs 201 and 202, respectively. It should be realized that even while considered "idle", the control processor maintains power to internal memory and performs typical periodic monitoring functions, such as strobing the keyboard circuit 167 ("KB") for a "Depressed Key" signal, for example, or routinely monitoring the power management function 178, such as for a "Low Battery" indication. However, even when in the typical operational mode as indicated on the current vs. frequency graph 201, the control processor uses only about one-sixth of the current used by the application processor 158 in its preferred operational mode. On the other hand, when the application processor 158 is placed into an idle state in which the device 158 is not driven by a clocking signal, the idle state current requirement has a specified maximum rating of 0.1 mA, as shown by the high-low indicated values at the 9.2 MHz frequency mark at and below graph 203 in FIG. 13, in which graph 203 indicates the typical operating current consumption of the application processor 158. It is to be noted that a deactivation of the application processor 158 could be implemented by a complete electrical shut down of the device. However, because of the low non-clocked power or current draw of the application processor 158, the application processor function is preferably deactivated by eliminating its clocking signal but maintaining the device 158 under DC bias. Removing the clocking signal from the application processor function achieves a desired power-down idle state while permitting the device 158 to be reactivated momentarily by an appropriate "wake up" control signal from the control microprocessor 159.

Tests have shown that typical data processing operations performed by the application processor 158 require approximately 10 milliseconds of time and not more than 20 milliseconds on the average of all operations which are typically performed by the application processor 158. It has further been found that a more user friendly and a more practical response time may be obtained from the data terminal 10 and less power is required when substantially all data processing operations are performed by the application processor 158 and the application processor is subsequently immediately deactivated, than if a single alternative microprocessor circuit were used which would operate at a higher rate and would include sufficient computing capacity to perform all required functions in good time. The combination of the application processor 158 and the control processor 159 amount in the preferred selection of the two processors only to an approximate increase in current usage of typically about ten percent and in the extreme of no more than 20 percent over the normal operating current level of the control processor by itself. An upper combined power consumption of the application processor 158 as controlled by the control processor 159 and the control processor 159 itself is about one fifth of the power consumption of the application processor when it is operated continuously. However, the display speed and data manipulation speed of the data terminal 10 essentially is the same as if the data terminal were controlled by the more powerful application processor 158.

The operating current requirement for the application processor 158 is related to the increased number of actively switching elements in each computational operation. Though having an interrupt function, the preferred 80C188EB processor 158 does not include, in contrast to the control processor 159, any internal memory devices. FIG. 11 consequently shows a data bus 205 of the processor 158 coupled to external memory devices, such as a flash electrically erasable and programmable read-only memory 161 ("FLASH EPROM"), a read-only memory 162 ("ROM") and a typical random access memory 163 ("RAM"). The data bus 205 further couples the application processor directly to the data display 164 ("LCD DISPLAY") of the data terminal 10, such as a dot addressable LCD graphic screen, for example. A direct data transfer by the high speed application processor 158 to the LCD screen is preferred because of substantial amounts of data handling or processing that is required in updating a particular screen. For example, even a small graphic screen display, such as a preferred screen of 48X100 pixels, requires that each of the pixels be updated on a continuous basis. Typically control circuits, which are typically part of the data display function 164 and are not separately shown, and which may be specific to a particular screen display may routinely re-apply currently displayed information dots in a cyclic refresh operation to the already identified pixels of the screen. However, in any updating of the screen, such as a simple display line scrolling operation, which an operator may not even consider noticeable or significant, each pixel of the screen must be updated. To perform such updating of information in a power efficient manner, a data processing operation and the high speed passing of the updated data between the RAM memory 58 and the data display 164 is most power-economically and most promptly and, hence, most user-friendly performed by a short operational activation of the application processor 158. More data processing with respect to the data display screen 164 may be required for routine menu operations. Menu operations are particularly desirable for such portable data terminals 10, in that the typical user would not be expected to be well acquainted with computer terminals. Well defined menu operations with a number of available menu levels are found to significantly increase the usefulness of a data terminal unit. An efficient menu operation is known to involve data base searching and data retrieval in addition to the normal display screen updating operation. In the above-described operations the described microprocessor circuit with the selectively activated data processing device 158 and the relatively smaller and slower control processor 159 has been found to be particularly advantageous.

A selective activation and deactivation of the microprocessor circuit portion implemented by the data processing device or application processor 158 would also provide for power savings when the operating speeds of the two processors 158 and 159 are the same. Though in the event of both processors 158 and 159 being operated at the same speed, the power savings do not appear to be as prevalent as realized in accordance with the preferred embodiment of the described invention.

A further function to be advantageously addressed by the application processor 158 is the data communication with the high speed asynchronous communication interface 174 ("H.S. ASYNC INTRFCE"), in support of facsimile or external display screen operations. Of less significance, yet typically power saving, are data communications to an RS-232/RS-485 serial interface 206 ("SERIAL INTERFACE"). However, it should be realized that certain communications operations, such as outgoing communications to a printer (not shown) for example, may also be communicated under the control of the control processor 159. Even when the application processor 158 selects data for communication to a line printer, a typical printer speed, except in a graphics mode would be sufficiently slow to allow the application processor 158 to operate in an intermittent, power saving mode. FIG. 11 consequently shows a second RS-232/RS-485 interface 207 ("SERIAL INTRFCE") coupled to a second data bus 208 which is further communicatively coupled to the control processor 159 to support the above described data communication operation via the control processor 159.

The data bus 208 is further shown as being coupled through a bus extension 209 directly to the application processor 158. The data bus extension 209 is particularly provided for direct data communication between the application processor and a data scanner 210 ("SCAN"), which may for example be a bar code reader. Because of the high rate at which data are generated by the operation of a data scanner, the data are most reliably received, processed and stored by the application processor, though the operation may not be power saving as such. A scanning operation may consequently involve the operation of both the application processor 158 and the control processor 159. According to a preferred operation of the control circuit 150, the control processor 159 monitors the circuit function of the data scanner 210 to detect a control signal which indicates the event of a scanner trigger depression and that a scanning operation of an associated physical scanning device is about to begin. The scanning operation results in a string of data appearing at the data bus 208 and the associated data bus 209. Since the application processor 158 is likely to be idle at the time of the occurrence of a trigger signal, the control processor places a "wake-up" signal on the control signal line 172 to activate the application processor 158. The control processor 159 further writes an 8-bit control character into the first latch 186. Upon completion of loading the control character into the data latch 186, the control processor 159 places a "one" signal on the character available line 192 to allow the application processor to read the control character from the latch 186. The application processor reads and decodes the control character in accordance with protocol instructions read from the ROM memory 162, for example. In the example of a scanner trigger indication, the decoded control character would signal the forthcoming string of information to be received by the application processor 158 directly from the scanner 210 over the data bus 209. Hence in contrast to being conditioned for the event of receiving data from the keyboard 167 or from the radio 176 which data might preferably be received over the data latch 186, the application processor would in the event of scanned incoming data be conditioned to read the "event data" as a string of data directly from the data bus 209. The term "event data" is used to describe data relating to an event. Any time event data requires processing, such event data would be routed to the application processor 158 either directly as described with respect to the scanner data or between the two processors 158 and 159, such as by the interface 168, for example. It is to be understood that conditioning the application processor to receive a string of data directly via the bus 209 need not be limited to the receipt of the scanner data but is contemplated with respect to any such future uses of the data terminal 10 which requires any high volume of data to be received and processed within a, comparatively to other typical serial receipt of data, brief period of time. Upon completion of the scanning operation, a trigger release signal would be loaded into the first latch and communicated from the control processor 159 to the application processor 158. Upon receipt of the signal and completion of any data processing operations remaining as a result of the receipt of data via the data bus 209, the application processor instructs the control processor to apply a "wake-up" signal to the control signal line 172 upon occurrence of any specified event requiring processing of data, after which the application processor re-enters an idle state. Thus, in accordance with the presently preferred embodiment, in the event of the direct receipt of a string of data by the application processor 158, the control processor 159 continues to control the application processor 158 in transmitting control codes to selectively enable or disable the application processor 158 to directly receive data via the data bus 209. The receipt data by the application processor 158 is referred to as "direct" data input, since the contemplated transfer of data via the data latches 186 and 193 or via the interface circuit 168 is bypassed.

FIG. 14 shows in form of a block diagram preferred electrical components of an exemplary data terminal 10, and of the preferred interactive relationship of such components to the application processor 158 or the control processor 159. FIG. 14 shows schematically a plurality of electrical components which are generally directly related to the functional elements discussed with respect to FIG. 11. In the embodiment shown in FIG. 14, the application processor 158 controls directly the previously referred to high speed asynchronous communications interface 174 and the RS-232/485 standards serial interface 206. The flash EPROM programmable read-only memory 161 is in the embodiment of FIG. 14 identified as having a preferred 256K byte storage capacity. The flash EPROM supplements the standard ROM memory 162 which is preferred to have a 512K byte storage capacity. In the preferred example of the data terminal 10, the ROM provides the typical and normally non-variable data processing protocol instructions and includes control instructions for standard display updating routines as well as other routines which are typically implemented by standard keyboard instructions and which pertain to typical data input and output commands.

The random access memory 163 is in the specific embodiment a semi-permanent static RAM type circuit and has a preferred capacity of 512K bytes. The preferred data storage capacity has been determined to provide sufficient storage for an on-board data base related to typical inventory or delivery route type information. In view of the portability of the data terminal 10, an unexpected loss of battery power may bring about a significant loss of information unless the data stored at the time of a temporary loss of battery power are protected from destruction until full battery power is restored. For example, the data terminal 10 may be returned at an initial signal of "low battery" to a battery charger unit (not shown) for a recharging operation and any stored data may be transferred, even while the battery 177 is being recharged, from the data terminal 10 to a host computer (not shown).

A preferred LCD display 164 is a graphic display having an array of 48 x 100 pixels. Typical menu or special graphic screen data may be pre-established for a particular data terminal 10 or for an application group of such units and may be stored initially in the specific ROM 162 provided for the particular unit or units 10. As previously discussed, the updating of displayed data on the screen device 164 requires a significant amount of data processing. Typically, such data processing operations involve accessing permanently stored screen display information, such as from the ROM 162 or from the flash EPROM 161, the manipulation of such information, and temporary storage of such manipulated information in the random access memory 163. As shown in FIG. 14, the application processor 158 has direct functional control over the respective devices for such data updating manipulations with respect to the LCD Display screen 164.

Another function related to the preferred LCD display screen 164 involves a contrast control circuit 166. The contrast of the LCD display screen 164 is typically set and adjusted by an operator and is a matter of choice. The contrast may be adjusted for example by a typical key depression or by a keyboard sequence given by an operator. Such control input executions are within the scope of operations of the control processor 159. Thus, in response to an appropriate command from the keyboard 167, the display contrast may be changed without activating the application processor 158. The contrast display may be controlled as indicated in FIG. 14 by the functional coupling of the keyboard circuit 167 to the control processor 158 and the further coupling of the processor 158 to the contrast control circuit 166 and then directly to the LCD display screen circuit 164.

The LCD display screen 164 in the preferred embodiment is equipped with a backlighting drive. Many warehouse operations, route delivery operations and even merchandising inventory operations require at least some operations of the data terminal units to be performed under sufficiently poor lighting conditions to suggest a need for a backlighting source to be supplied as a standard feature of the LCD display screen 164. The backlight drive circuit 171 is preferably coupled through the interface circuit 168 to the control processor 159. In that such a backlighting circuit may have a need for adjusting, for example, the brightness or luminescence of the circuit, both the application processor 158 and the control processor 159 may interact through the interface circuit 168 to provide for an operator controlled brightness control sequence to be communicated to the backlight drive 171.

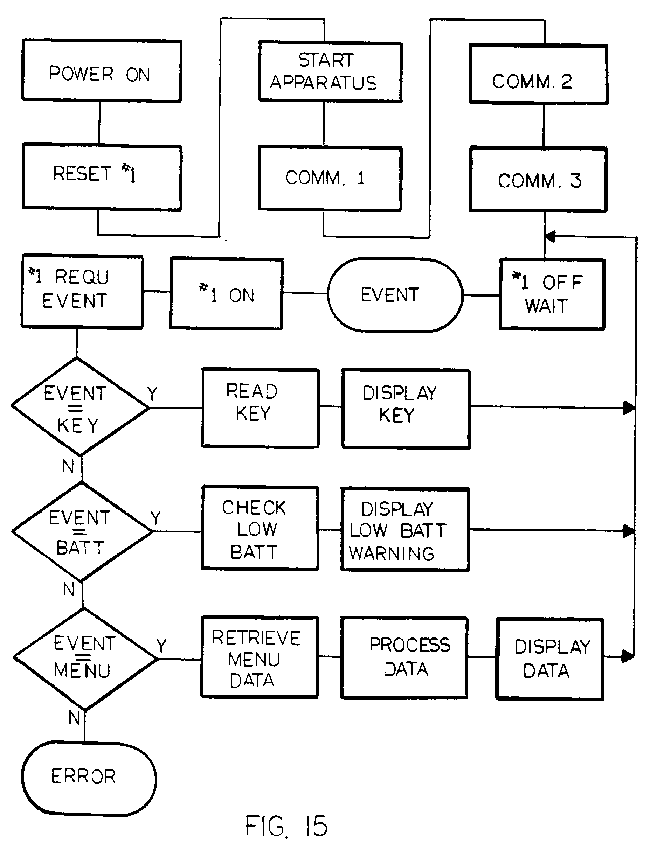

It should be realized that the interface circuit 168 is a simplified schematic representation of a large-scale integrated circuit 168 which includes timing function circuits for the real time clock and its functions, as well as for providing the clocking signals to each of the two processors 158 and 159. The circuit 168 further provides the already described data communication functions between the application processor 158 and the control processor 159 as represented in FIG. 11 by the two latching circuits 186 and 193. The function by the control processor 159 to activate or "wake up" the application processor for data processing operations is accentuated in the representation of the "wake-up" feature by the separate function line 172 in FIG. 14. In one contemplated embodiment the interface circuit 168 may include integrally a switching circuit function for separately switching the application processor 158 off or on, as indicated by the function blocks "#1 OFF WAIT" and "#1 ON", as shown in FIG. 15. Such a switching operation may be implemented by a typical switch as part of the integrated interface circuit 168 which selectively interrupts and reestablishes the clocking signal to the application processor 158. The function of deactivating and reactivating the application processor is controlled in a preferred embodiment via the interface circuit 168 in a somewhat different manner. Instead of controlling the clocking circuit to the application processor 158 in the integrated circuit with a control signal from the control processor 159, the control function is preferably split. It has namely been found expedient for the application processor 158 to provide a shutdown status signal to the control processor 159 and to shut itself down. The control processor 159 subsequently returns the application processor 158 to an active state upon occurrence of any event which requires the operation of the application processor 158. The process flow diagram of FIG. 15 generally depicts operational procedures between the application processor 158 and the control processor 159.

Further in reference to FIG. 14, a trigger control signal of the scanner 210 is preferably received by the control processor 159. However the data flow from the scanner 210 will be received directly by the application processor 158 for further processing and storage. Input signals which are received at speeds within the operational envelope of the control processor 159 are received by and transferred through the control processor 159. For example, key depression signals from the keyboard 167 are preferably received directly by the control processor 159. A preferred keyboard size for the data terminal 10 referenced herein, as indicated in FIG. 14 is a 6x8 key matrix. Such a choice is made based on space considerations and requires that multiple functions may be implemented by each of the keys. However, the selection of a preferred keyboard remains in any case one of choice and has no particular bearing on the gist of the invention. Because of the "slow" realtime selection by an operator in comparison to the "fast" processing speed of even the slower control processor, the selection interpretation of which key function has been selected by an operator may be made by the control processor 159. An "event" indication character communicated to the application processor 158 preferably reflects already which of the available functions of a particular key has been selected. The preprocessing of relatively slowly occurring events has been found to advantageously limit the operational periods of the application processor 158.

The control processor further controls an input to an audible alarm circuit 211 ("BUZZER"). An audible alarm is a slowly occurring input signal to generate a signal at audio frequency, so as to alert an operator of an alarm condition or to signal that a processing operation has been completed. For example, when the application processor 158 has received a string of data from the scanner 210, and has further processed the received information to verify its correctness, the application processor 158 may communicate an acceptance code to the control processor 159 and be shut down from further operation. The control processor will then routinely generate an audible signal to alert the operator of the unit of the acceptance of the code read via the scanner, for example. Prior to communicating the acceptance code to the control processor, the application processor may have retrieved from its memory 163, for example, information relating to the bar code which has just been read and accepted, and may have compiled an information screen displaying such retrieved information to the operator prior to the deactivation of the application processor 158. Thus, by the time the operator is alerted by the audible signal that the respective bar code has been read and accepted, the pertinent information regarding the item represented by the bar code is already displayed on the LCD display screen 164.

Other devices which are preferably under direct control of the control processor 159 are the radio 176 with its included radio interface ("RADIO INTERFACE"), and the power control circuit 178 ("CHARGE/ POWER CONTROL") of the data terminal 10. The serial interface 207 ("RS-232/RS-485 SERIAL INTERFACE") may optionally be controlled by the control processor 159. Based on the power saving interaction between the application processor 158 and the control processor 159 various other additions of devices or functions to the general operation of the data terminal 10 may be feasible without unduly limiting the operational cycle of the data terminal 10.

The interaction between the control processor 159 and the application processor 158 is described in greater detail in reference to both FIGS. 14 and 15. In general, the operations of the application processor are restricted to data processing operations while the operations of the control processor 159 pertain to input-output control functions which include periodic monitoring functions, such as monitoring the state of the battery 177 via the charge/power control circuit 178. Though being less powerful and operating slower than the application processor 158, the control processor 159 controls the activation or reactivation of the application processor 158. However, the application processor 158 is preferred to process the parameters and feed the respective instructions to the control processor 159 by which the control processor is operated. The application processor 158 is therefore according to the preferred embodiment the one device which accesses the operations protocol of the data terminal 10 from either the ROM 162 or the flash EPROM device 161.

With the depression of the power switch by an operator, the data terminal unit is physically started with a cold start ("POWER ON"). The turn-on starts the clocking signal and the reset of both the control and application processors 158 and 159. The control processor 159 may reset the application processor 158 ("RESET #1"). The reset operation starts the apparatus ("START APPARATUS") with an initialization sequence of communications between the application processor 158 and the control processor 159. During the initialization the application processor 158 retrieves from its program storage default values, such as for a battery threshold value and transfers the respective default value to the control processor 158 ("COMM.1"). The control processor retains the default value and uses it in its further operations to operate the power control circuit 178. Other initialization values may be communicated to set an initial contrast value on the LCD screen display 164 ("COMM.2"), and whether or not the backlighting function is to be turned ("COMM.3"), for example. The application processor 158 further may retrieve data from memory 161, 162 or 163, and manipulate such data to place an initial screen display on the screen to signal to the operator that the data terminal 10 is operational. Upon completion of data manipulation and communication of the default values for initializing the data terminal 10, the application processor 158 communicates to the control processor 159 that it is assuming its rest state ("#1 OFF WAIT") and is shut off pending the occurrence of an event.

Upon occurrence of an event, such as a "battery low indication" or the depression of a key by the operator of the data terminal 10, the control processor 159 causes the application processor 158 to become turned on ("#1 ON"). Typically the clock signal to the application processor 158 may be provided by a control signal applied to the interface circuit 168, or the application processor may become otherwise enabled, such as by an enable signal applied to the control signal line 172. Upon having become activated, the application processor 158 communicates with the control processor 159, such as via the interface circuit 168 in the manner also described with respect to FIG. 11, to request ("#1 REQU. EVENT") data as to the type of event that has occurred. After receiving the respective communication from the control processor 159, the application processor 158 tests the received information as to the type of event and proceeds to process data as required according to the program. FIG. 15 shows three typical events of a large number of programmed events for which the application processor 158 may be activated. A typical key depression may result in reading the value of the depressed key from the second data latch 193 as described with respect to FIG. 11, or from an equivalent register of the integrated circuit 168 in FIG. 14. The information then results in the retrieval of data regarding the addresses of pixels which will be changed to a logical "high" to depict the information on the LCD display screen 164, the respective data being transferred to the respective circuit elements of the display screen 164. Thereafter, the application processor communicates to the control processor 159 that the instructions have been executed and is shut down to await a further activation and "EVENT" instruction. The shutdown of the application processor 158 may be initiated either by the application processor 158 itself or by the control processor 159. Because the start-up or activation of the application processor 158 is initiated by the control processor 159, it may be desirable to disable the application processor 158 through the control processor 159.

Another typical event for activating the application processor 158 may be the detection of a low battery indication in response to a threshold value transferred by the application processor 158 to the control processor 159 during the described start-up procedure. The protocol may require that the application processor 158 verify the low battery indication by providing its own comparison check. Because of an impending shutdown due to a low battery indication, the application processor may complete any operation if the low battery indication is still within tolerable low limits or may suspend further data processing because of risk of errors in its operation due to the low battery voltage. The application processor may further display a low battery indication ("DISPLAY LOW BATT WARNING") on the LCD display screen 164 and then be shut off pending further event instruction as shown in FIG. 15.

Another type event may be a special function key instruction such as the indication that a menu operation has been selected. The application processor 158 proceeds to access a designated program routine corresponding to the requested menu choice ("RETRIEVE MENU DATA"). The respective program instructions are executed ("PROCESS DATA"), and the result or completion of the routine is displayed on the LCD display screen 164 ("DISPLAY DATA"). The displayed result may be preceded by a repetitive interactive data transfer between the application processor 158 and the control processor 159, for example, when the menu choice requires the transmission of displayed information to a host computer. In such an event the application processor 158 may transfer the displayed information character by character to the control processor 159. The control processor 159 in turn activates the radio interface and transfers the information string to the radio interface to be transmitted in accordance with the program instructions interpreted by the application processor 158. FIG. 15 shows an error trap ("ERROR") to which the program instructions proceed if an event code is not recognized by however many event descriptions and resulting processing routines by the application processor 158 may have been programmed into the application program for the particular application of the data terminal 10. It has been found that on the average, data processing operations performed by the application processor 158 require less than 10 milliseconds. Thus, on the average, operations including the processing of keystrokes and the associated display manipulations require less than one fiftieth of the average operational period of the data terminal 10. Substantial power savings are consequently achieved by selectively de-activating and re-activating the application processor for preprogrammed events which require the execution of the respective data manipulations at a speed which is not obtainable by the preferred control processor 159.

Further in reference to FIG. 15, if none of the event tests recognize the particular code supplied for identification to the application processor 158, an event error trap routine ("ERROR") would be used to inform the operator of the error condition. Such a routine may, for example, instruct the operator to again enter the most recently requested operation, and may accompany the error routine by an audible warning from the buzzer. Various changes in the described preferred control sequence may be implemented. Certain routines may be implemented at the described slower speed by the control processor 159 directly, while the application processor 158 remains deactivated. Other changes may be made in the selection of the first and second microprocessor devices 158 and 159 as application and control processors, respectively. The described microprocessor devices have been found particularly suitable for various operations that were expected to be performed by the data terminal 10 in the above-referred to operations.

## Claims

1. A potable terminal device comprising:
a base module (16) including first memory (108) that stores a first control program, a first connector (62), and first processing circuitry (104) that controls data applied to and received from the first connector in accordance with the first control program; and
a removable communications device (48, 55, 75) engagingly received by the base modules and comprising a second connector (61) and a wireless transceiver (128, 134, 138), **characterised in that** the removable communications device comprises second processing circuitry (125, 144), and, when the removable communications device is received by the base module, the second connector communicatively couples with the first connector, and the second processing circuitry and the wireless transceiver together manage transmissions of data received from the first processing circuitry via the first and second connectors in accordance with the first control program of the first processing circuitry.

2. A communications device (48, 55, 75) adapted to be removably received by a base module (16) so as to form a potable terminal device, the base module (16) including first memory (108) that stores a first control program, a first connector (62) and first processing circuitry (104) that controls data applied to and received from the first connector in accordance with the first control program, the removable communications device comprising:
a second connector (61) and a wireless transceiver (128, 134, 138) characterised in that the communications device further comprises a second processing circuitry (125, 144), arranged so that when the removable communications device is received by the base module (16), the second connector (61) communicatively couples with the first connector (62), and the second processing circuitry (125, 144) and the wireless transceiver (128, 134, 138) together manage transmissions of data received from the first processing circuitry (104) via the first and second connectors in accordance with the first control program of the first processing circuitry (104).

3. A device according to claim 1 or 2, further comprising second memory (144, 145).

4. A device according to claim 3, wherein the second memory buffers the data applied by the first processing circuitry to the first connector.

5. A device according to claim 4, wherein the second memory buffers the data to support batch processing of transmissions via the wireless transceiver.

6. A device according to claim 3 or 4, wherein the second memory buffers the data applied by the first processing circuitry to the first connector to accommodate storage at a higher rate than immediate transmission permits.

7. A device according to claim 3, wherein the second memory stores a second control program that directs interaction of the second processing circuitry in managing data flow.

8. A device according to any one of claims 3 to 7, when dependent on claim 1, wherein the second memory is disposed in the removable communications device.

9. A device according to any one of the preceding claims, wherein the first control program provides a common interface to any of a plurality of differing types of removable communications device receivable by the base module.

10. A device according to any one of the preceding claims, wherein the removable communications device comprises a spread spectrum transmitter.

11. A device according to any one of the preceding claims, further comprising data collection circuitry (129).

12. A device according to claim 11, wherein the data collection circuitry comprises code reading circuitry.

13. A device according to claim 11 or 12, wherein the data collection circuitry is disposed in the removable communications device.

14. A device according to any one of the preceding claims, wherein the first processing circuitry (104) comprises a first microprocessor.

15. A device according to claim 14, wherein the first microprocessor is selectively operable to perform data processing operations.

16. A device according to claim 14 or 15, wherein the first processing circuitry includes a second microprocessor.

17. A device according to claim 16, wherein the second microprocessor activates the first microprocessor to perform the data processing operations.

18. A device according to claim 16 or 17, wherein the first and second microprocessors operate at different clock rates.

19. A device according to any one of claims 1 to 15, wherein the second processing circuitry comprises a second microprocessor.

20. A device according to any one of the preceding claims wherein data flows through the first and second connectors pursuant to a uniform data transfer protocol.

21. A device according to any one of the preceding claims, wherein the second connector communicatively couples with the first connector upon receipt of the removable communications device into the base module.

22. A device according to any one of the preceding claims, wherein the device is sized for hand-held operation.

23. A portable terminal device according to any one of the preceding claims when dependent on claim 1, wherein the device further comprises a user interface (18, 19).

24. A device according to any one of the preceding claims, wherein the base module comprises a computing device.

25. A device according to any of the preceding claims, further including an antenna having a pivotal mounting assembly.

26. A device according to any one of the preceding claims, further comprising a housing.

27. A data communications system comprising:
a base module (16), comprising first processing circuitry (104), a first connector (62) and a first memory (108) that stores base module communications software, and
a plurality of communications modules (48, 55, 75) interchangeably couplable to the base module (16), each communications module comprising a second connector (61) and at least one of a plurality of wireless transceivers (128, 134, 138) of different types;
said base module receiving a selected one of the plurality of communications modules in an engaging position that communicatively couples the first and second connectors (62, 61) enabling the base module (16) to communicate via the selected communications module; characterised in that each communications module further comprises second processing circuitry (125, 144) and a second memory (144, 145) that stores communications module software,
wherein the second processing circuitry, using the communications module software, and the first processing circuitry, using the base module communications software, supports communication of data via at least one of the plurality of wireless transceivers regardless of which of the plurality of communications modules is selected.

28. A system according to claim 27, wherein the second memory buffers data from the first processing circuitry for subsequent delivery to at least one of the plurality of wireless transceivers.

29. A system according to claim 28, wherein the second memory buffers the data to support batch processing of transmissions.

30. A system according to claim 28 or 29, wherein the second memory buffers the data to accommodate storage at a higher rate than immediate transmission permits.

31. A system according to any one of claims 27 to 30, wherein the second memory is disposed in the interchangeable communications modules.

32. A system according to any one of claims 27 to 31, wherein one of the plurality of wireless transceivers comprises a spread spectrum transceiver.

33. A system according to any one of claims 27 to 32, further comprising data collection circuitry (129).

34. A system according to claim 33, wherein the data collection circuitry comprises code reading circuitry.

35. A system according to claim 33 or 34, wherein the data collection circuitry is disposed in one of the plurality of communications modules.

36. A system according to any of claims 27 to 35, wherein the first processing circuitry comprises a first microprocessor.

37. A system according to claim 36, wherein the first microprocessor is selectively operable to perform data processing operations.

38. A system according to claim 36 or 37, wherein the first processing circuitry comprises a second microprocessor.

39. A system according to claim 38, wherein the second microprocessor activates the first microprocessor to perform the data processing operations.

40. A system according to claim 38 or 39, wherein the first and second microprocessors operate at different clock rates.

41. A system according to any of claims 27 to 37, wherein the second processing circuitry comprises a second microprocessor.

42. A system according to any one of claims 27 to 41, wherein data flows through the first and second connectors pursuant to a uniform data transfer protocol.

43. A system according to any one of claims 27 to 42, wherein the second connector communicatively couples with the first connector upon receipt of the selected one of the plurality of interchangeable communications modules into the base module.

44. A system according to any one of claims 27 to 43, wherein the combination of the base module and selected communications module is sized for hand-held operation.

45. A system according to any one of claims 27 to 44, wherein the base module further comprises a user interface (18, 19).

46. A system according to any one of claims 27 to 45, wherein the base module comprises a computing device.

47. A system according to any one of claims 27 to 46, further comprising an antenna having a pivotal mounting assembly.

## Patentansprüche

1. Tragbares Terminalgerät, das folgendes aufweist:
einen Grundbaustein (16), der einen ersten Speicher (108) einschließt, der ein erstes Steuerprogram speichert, einen ersten Anschluss (62), und eine erste Verarbeitungsschaltung (104), die Daten steuert, die an den ersten Anschluss gemäß dem ersten Steuerprogramm angelegt und von diesem empfangen werden; und ein entfernbares Kommunikationsgerät (48, 55, 75), das von dem Grundbaustein eingreifend aufgenommen wird, und das einen zweiten Anschluss (61) und einen drahtlosen Transceiver (128, 134, 138) aufweist,
**dadurch gekennzeichnet, dass**
das entfernbare Kommunikationsgerät eine zweite Verarbeitungsschaltung (125, 144) aufweist, und, wenn das entfernbare Kommunikationsgerät von dem Grundbaustein aufgenommen wird, der zweite Anschluss sich kommunizierend an den ersten Anschluss koppelt, und die zweite Verarbeitungsschaltung und der drahtlose Empfänger zusammen Übertragungen von Daten handhaben, die von der ersten Verarbeitungsschaltung über den ersten und zweiten Anschlusse gemäß dem ersten Steuerprogramm der ersten Verarbeitungsschaltung empfangen werden.

2. Kommunikationsgerät (48, 55, 75), das von einem Grundbaustein (16) entfernbar aufgenommen werden kann, um ein tragbares Terminalgerät zu bilden, wobei der Grundbaustein (16) einen ersten Speicher (108) einschließt, der ein erstes Steuerprogram speichert, einen ersten Anschluss (62), und eine erste Verarbeitungsschaltung (104), die Daten steuert, die von dem ersten Anschluss gemäß dem ersten Steuerprogramm angelegt und von diesem empfangen werden, wobei das entfernbare Kommunikationsgerät folgendes aufweist:
einen zweiten Anschluss (61) und einen drahtlosen Transceiver (128, 134, 138),
**dadurch gekennzeichnet, dass**
das Kommunikationsgerät weiterhin eine zweite Verarbeitungsschaltung (125, 144) aufweist, die so angeordnet ist, dass, wenn das entfernbare Kommunikationsgerät von dem Grundbaustein (16) empfangen wird, der zweite Anschluss (61) sich kommunizierend an den ersten Anschluss (62) koppelt, und die zweite Verarbeitungsschaltung (125, 144) und der drahtlose Transceiver (128, 134, 138) zusammen Übertragungen von Daten handhaben, die von der ersten Verarbeitungsschaltung über den ersten und zweiten Anschlusse gemäß dem ersten Steuerprogramm der ersten Verarbeitungsschaltung (104) empfangen werden.

3. Gerät nach Anspruch 1 oder 2, das weiterhin einen zweiten Speicher (144, 145) aufweist.

4. Gerät nach Anspruch 3, in dem der zweite Speicher die Daten puffert, die von der ersten Verarbeitungsschaltung an den ersten Anschluss angelegt werden.

5. Gerät nach Anspruch 4, in dem der zweite Speicher die Daten puffert, um Stapelverarbeitung von Übertragungen über den drahtlosen Transceiver zu unterstützen.

6. Gerät nach Anspruch 3 oder 4, in dem der zweite Speicher die Daten puffert, die von der ersten Verarbeitungsschaltung an den ersten Anschluss angelegt werden, um Speicherung mit einer höheren Rate zu erlauben, als sofortige Sendung gestattet.

7. Gerät nach Anspruch 3, in dem der zweite Speicher ein zweites Steuerprogramm speichert, das die Interaktion der zweiten Verarbeitungsschaltung bie der Handhabung des Datenstroms steuert.

8. Gerät nach einem der Ansprüche 3 bis 7, rückbezogen auf Anspruch 1, in dem der zweite Speicher in dem entfernbaren Kommunikationsgerät angeordnet ist.

9. Gerät nach einem der vorhergehenden Ansprüche, in dem das erste Steuerprogramm eine gemeinsame Schnittstelle für irgendwelche einer Vielzahl von unterschiedlichen Arten von entfernbaren Kommunikationsgeräten liefert, die von dem Grundbaustein aufgenommen werden können.

10. Gerät nach einem der vorhergehenden Ansprüche, in dem das entfernbare Kommunikationsgerät einen Streuspektrumtransceiver aufweist.

11. Gerät nach einem der vorhergehenden Ansprüche, das weiterhin eine Datensammelschaltung (129) aufweist.

12. Gerät nach Anspruch 11, in dem die Datensammelschaltung eine Codeleseschaltung aufweist.

13. Gerät nach Anspruch 11 oder 12, in dem die Datensammelschaltung in dem entfernbaren Kommunikationsgerät angeordnet ist.

14. Gerät nach einem der vorhergehenden Ansprüche, in dem die erste Verarbeitungsschaltung (104) einen ersten Mikroprozessor aufweist.

15. Gerät nach Anspruch 14, in dem der erste Mikroprozessor wahlweise betrieben werden kann, um Datenverarbeitungsoperationen auszuführen.

16. Gerät nach Anspruch 14 oder 15, in dem die erste Verarbeitungsschaltung einen zweiten Mikroprozessor einschließt.

17. Gerät nach Anspruch 16, in dem der zweite Mikroprozessor den ersten Mikroprozessor aktiviert, um die Datenverarbeitungsoperationen auszuführen.

18. Gerät nach Anspruch 16 oder 17, in dem die ersten und zweiten Mikroprozessoren mit verschieden Grundtakten arbeiten.

19. Gerät nach einem der Ansprüche 1 bis 15, in dem die zweite Verarbeitungsschaltung einen zweiten Mikroprozessor aufweist.

20. Gerät nach einem der vorhergehenden Ansprüche, in dem Daten durch den ersten und zweiten Anschlusse gemäß eines einheitlichen Datenübertragungsprotokolls strömen.

21. Gerät nach einem der vorhergehenden Ansprüche, in dem der zweite Anschluss sich nach Aufnahme des entfernbaren Kommunikationsgeräts in den Grundbaustein kommunizierend an den ersten Anschluss koppelt.

22. Gerät nach einem der vorhergehenden Ansprüche, in dem das Gerät für einen in der Hand gehaltenen Betrieb dimensioniert ist.

23. Tragbares Terminalgerät nach einem der vorhergehenden Ansprüche, rückbezogen auf Anspruch 1, in dem das Gerät weiterhin eine Benutzerschnittstelle (18, 19) aufweist.

24. Gerät nach einem der vorhergehenden Ansprüche, in dem der Grundbaustein ein Rechnervorrichtung aufweist.

25. Gerät nach einem der vorhergehenden Ansprüche, das weiterhin eine Antenne mit einer schwenkbaren Anbringungsanordnung einschließt.

26. Gerät nach einem der vorhergehenden Ansprüche, das weiterhin ein Gehäuse aufweist.

27. Datenkommunikationssystem, das folgendes aufweist:
einen Grundbaustein (16), der eine erste Verarbeitungsschaltung (104) aufweist, einen ersten Anschluss (62), und einen ersten Speicher (108), der Grundbausteinkommunikationssoftware speichert, und
eine Vielzahl von Kommunikationsbausteinen (48, 55, 75), die auswechselbar an den Grundbaustein (16) gekoppelt werden können, wobei jeder Kommunikationsbaustein einen zweiten Anschluss (61) aufweist, und wenigstens einen einer Vielzahl von drahtlosen Transceivern (128, 134, 138) von unterschiedlichen Arten;
wobei der Grundbaustein einen ausgewählten der Vielzahl von Kommunikationsbausteinen in einer eingreifenden Stellung empfängt, die die ersten und zweiten Anschlüsse (62, 61) kommunizierend koppelt, was dem Grundbaustein (16) ermöglicht, über den ausgewählten Kommunikationsbaustein zu kommunizieren;
**dadurch gekennzeichnet, dass**
jeder Kommunikationsbaustein weiterhin eine zweite Verarbeitungsschaltung (125, 144) und einen zweiten Speicher (144, 145) aufweist, der Kommunikationsbausteinsoftware speichert,
wobei die zweite Verarbeitungsschaltung unter Benutzung der Kommunikationsmodulsoftware, und die erste Verarbeitungsschaltung unter Benutzung der Grundbausteinsoftware die Kommunikation von Daten über wenigstens einen der Vielzahl von drahtlosen Transceivern unterstützt, ungeachtet welcher der Vielzahl von Kommunikationsbausteinen ausgewählt ist.

28. System nach Anspruch 27, in dem der zweite Speicher Daten von der ersten Verarbeitungsschaltung zur nachfolgenden Lieferung an wenigstens einen der Vielzahl von drahtlosen Transceivern puffert.

29. System nach Anspruch 28, in dem der zweite Speicher die Daten puffert, um Stapelverarbeitung von Übertragungen zu unterstützen.

30. System nach Anspruch 28 oder 29, in dem der zweite Speicher die Daten puffert, um Speicherung mit einer höheren Rate zu erlauben, als sofortige Übertragung gestattet.

31. System nach einem der Ansprüche 27 bis 30, in dem der zweite Speicher in den austauschbaren Kommunikationsbausteinen angeordnet ist.

32. System nach einem der Ansprüche 27 bis 31, in dem einer der Vielzahl von drahtlosen Transceivern einen Streuspektrumtransceiver aufweist.

33. System nach einem der Ansprüche 27 bis 32, das weiterhin eine Datensammelschaltung (129) aufweist.

34. System nach Anspruch 33, in dem die Datensammelschaltung eine Codeleseschaltung aufweist.

35. System nach Anspruch 33 oder 34, in dem die Datensammelschaltung in einen der Vielzahl von Kommunikationsbausteinen angeordnet ist.

36. System nach einem der Ansprüche 27 bis 35, in dem die erste Verarbeitungsschaltung einen ersten Mikroprozessor aufweist.

37. System nach Anspruch 36, in dem die erste Verarbeitungsschaltung wahlweise betrieben werden kann, um Datenverarbeitungsoperationen auszuführen.

38. System nach Anspruch 36 oder 37, in dem die erste Verarbeitungsschaltung einen zweiten Mikroprozessor aufweist.

39. System nach Anspruch 38, in dem der zweite Mikroprozessor den ersten Mikroprozessor aktiviert, um die Datenverarbeitungsoperationen auszuführen.

40. System nach Anspruch 38 oder 39, in dem die ersten und zweiten Mikroprozessoren mit verschiedenen Grundtakten arbeiten.

41. System nach einem der Ansprüche 27 bis 37, in dem die zweite Verarbeitungsschaltung einen zweiten Mikroprozessor aufweist.

42. System nach einem der Ansprüche 27 bis 41, in dem Daten durch den ersten und zweiten Anschlusse gemäß eines einheitlichen Datenprotokolls strömen.

43. System nach einem der Ansprüche 27 bis 42, in dem der zweite Anschluss sich nach Empfang des ausgewählten der Vielzahl von austauschbaren Kommunikationsbausteinen kommunizierend an den ersten Anschluss in den Grundbaustein koppelt.

44. System nach einem der Ansprüche 27 bis 43, in dem die Kombination des Grundbausteins und des ausgewählten Kommunikationsbausteins für einen in der Hand gehaltenen Betrieb bemessen ist.

45. System nach einem der Ansprüche 27 bis 44, in dem der Grundbaustein weiterhin eine Benutzerschnittstelle (18, 19) aufweist.

46. System nach einem der Ansprüche 27 bis 45, in dem der Grundbaustein ein Rechnervorrichtung aufweist.

47. System nach einem der Ansprüche 27 bis 46, das weiterhin eine Antenne mit einer schwenkbaren Anbringungsanordnung aufweist.

## Revendications

1. Dispositif portatif de terminal comportant:
un module de base (16) ayant une première mémoire (108) pour ranger un premier programme de commande, un premier bornier (62), et un premier ensemble de circuits de traitement (104) qui commande les données appliquées à et reçues depuis le premier bornier en conformité avec le premier programme de commande; et
un dispositif amovible de communication (48,55,75) reçu engagé par le module de base et comportant un deuxième bornier (61) et un émetteur-récepteur de radio (128,134,138),
caractérisé en ce que le dispositif amovible de communication comporte un deuxième bornier de traitement (125,144) et lorsque le dispositif amovible de communication est reçu par le module de base, le deuxième bornier est accouplé en communication avec le premier bornier, et ensemble le deuxième bornier de traitement et l'émetteur-récepteur de radio assurent la gestion des données reçues depuis le premier bornier de traitement par l'intermédiaire des premier et deuxième borniers en conformité avec le premier programme de commande du premier bornier de traitement.

2. Dispositif de communications (48,55,75) adapté tel à la réception amovible par un module de base (16) de façon à former un dispositif de bornier portatif, le module de base (16) prévoyant une première mémoire (108) pour ranger un premier programme de commande, un premier bornier (62) et un premier dispositif de circuit de commande de traitement (104) qui commande les données appliquées à et reçues du premier bornier en conformité avec le premier programme de commande, le dispositif amovible de communications comportant:
un deuxième bornier (61) et un émetteur-récepteur de radio (128,134,138) caractérisé en ce que le dispositif de communication comporte en outre un deuxième dispositif de circuit de traitement (125,144), prévu tel qu'à la réception par le module de base (16) du dispositif amovible de communication, le deuxième bornier (61) est accouplé communiquant avec le premier bornier (62), et le deuxième bornier de circuits de traitement (125,144) et l'émetteurrécepteur de radio (128,134,138) assurent ensemble les transmissions de données reçues du premier bornier de traitement (104) par l'intermédiaire des premier et deuxième borniers en conformité avec le premier programme de commande du premier bornier de traitement (104).

3. Dispositif selon avec la revendication 1 ou 2 comportant en outre une deuxième mémoire (144,145).

4. Dispositif selon la revendication 3, dont la deuxième mémoire sert de tampon aux données appliquées par le premier ensemble de circuits de traitement au premier bornier.

5. Dispositif selon la revendication 4, dont la deuxième mémoire sert de tampon aux données pour supporter le traitement en tranches des transmissions par l'intermédiaire du radio émetteur-transmetteur.

6. Dispositif selon la revendication 3 ou 4, dont la deuxième mémoire sert de tampon aux données appliquées au premier bornier par le premier ensemble de circuits de traitement pour admettre le rangement selon une cadence plus poussée que la transmission immédiate ne permet.

7. Dispositif selon la revendication 3, dont la deuxième mémoire admet un deuxième programme de commande qui dirige l'interaction du deuxième ensemble de circuits de traitement en mode de gestion de circulation des données.

8. Dispositif selon l'une ou l'autre des revendications 3 à 7, en dépendance de la revendication 1, dont la deuxième mémoire réside dans le dispositif amovible de communications.

9. Dispositif selon l'une ou l'autre des revendications précédentes, dont le premier programme de commande prévoit une interface commune avec l'une ou l'autre d'une pluralité de modèles différents de dispositifs amovibles de communications recevables par le module de base.

10. Dispositif selon l'une ou l'autre des revendications précédentes, dont le dispositif amovible de communications comporte un émetteur à spectre aéré.

11. Dispositif selon l'une ou l'autre des revendications précédentes, ayant en outre un ensemble de circuits collecteurs de données (129).

12. Dispositif selon la revendication 11, dont l'ensemble de circuits collecteurs de données comporte un ensemble de circuits de lecture de code.

13. Dispositif selon la revendication 11 ou 12, dont l'ensemble de circuits collecteurs de données réside dans le dispositif amovible de communications.

14. Dispositif selon l'une ou l'autre des revendications précédentes, dont le premier circuit de traitement (104) comporte un premier microprocesseur.

15. Dispositif selon la revendication 14, dont le premier microprocesseur fonctionne de manière sélective pour effectuer des opérations de traitement de données.

16. Dispositif selon la revendication 14 ou 15, dont le premier bornier de traitement comporte un deuxième microprocesseur.

17. Dispositif selon la revendication 16, dont le deuxième microprocesseur active sélectivement le premier microprocesseur pour effectuer les opérations de traitement de données.

18. Dispositif selon la revendication 16 ou 17, dont les premier et deuxième microprocesseurs fonctionnent selon des régimes différents d'horloge.

19. Dispositif selon l'une ou l'autre des revendications de 1 à 15, suivant lesquelles le deuxième élément de traitement de circuit comporte un deuxième microprocesseur.

20. Dispositif selon l'une ou l'autre des revendications précédentes suivant lesquelles les données passent par le premier et le deuxième bornier suivant un protocole uniforme de transfert de données.

21. Dispositif selon l'une ou l'autre des revendications précédentes suivant lesquelles le deuxième bornier se raccorde en mode communiquant avec le premier bornier suite à la réception du dispositif amovible de communication par le module de base.

22. Dispositif selon l'une ou l'autre des revendications précédentes selon lesquelles la taille du dispositif admet le fonctionnement manuel portatif.

23. Dispositif bornier portatif selon l'une ou l'autre des revendications précédentes suite à leur dépendance de la revendication 1, suivant laquelle le dispositif prévoit en outre une interface d'utilisateur (18,19).

24. Dispositif selon l'une ou l'autre des revendications précédentes, dont le module de base comporte un dispositif de calcul.

25. Dispositif selon l'une ou l'autre des revendications précédentes, ayant en outre une antenne portant une garniture pivotante de pose.

26. Dispositif selon l'une ou l'autre des revendications précédentes, comportant en outre un logement.

27. Système de communication des données comportant:
un module de base (16) comportant un premier ensemble de circuits de traitement (104), un premier bornier (62) et une première mémoire (108) pour retenir le logiciel du module de base de communication, et
une pluralité de modules de communication (48,55,75) raccordés interchangeables au module de base (16), chaque module de communication comportant, un deuxième bornier (61) et au minimum un émetteur-récepteur de radio (128,134,138) d'une pluralité de modèles différents;
ledit module de base recevant un élément sélectionné de la pluralité de modules de communication en position d'engagement admettant le raccord en communication des premier et le deuxième borniers (62,61) permettant au module de base (16) la communication par l'intermédiaire dudit module de communication sélectionné; caractérisé en ce que chaque module de communication comporte en outre un deuxième bornier de traitement (125,144), et une deuxième mémoire (144,145) pour ranger le logiciel de module de communication;
dont le deuxième élément de circuit de traitement, utilisant le logiciel de module, et le premier bornier de traitement, utilisant le logiciel de module de base de communication, permet la communication des données par la voie d'une unité au minimum de la pluralité d'émetteursrécepteurs sans égard à celui de la pluralité des modules de communication qui est sélectionné.

28. Système selon la revendication 27, dont la deuxième mémoire sert de tampon aux données provenant du premier ensemble de circuits de traitement pour l'apport éventuel à l'un au minimum de la pluralité d'émetteurs-récepteurs de radio.

29. Système selon la revendication 28, dont la deuxième mémoire sert de tampon aux données de façon à soutenir le traitement séquentiel des transmissions.

30. Système selon la revendication 28 ou 29, dont la deuxième mémoire sert de tampon pour admettre le rangement en régime plus poussé que la transmission ne le permet.

31. Système selon l'une ou l'autre des revendications 27 à 30, dont laquelle la deuxième mémoire est installée dans le module interchangeable de communications.

32. Système selon l'une ou l'autre des revendications 27 à 31, dont laquelle l'une de la pluralité des émetteurs-récepteurs comporte un émetteur-récepteur à spectre aéré.

33. Système selon l'une ou l'autre des revendications 27 à 32, dont en outre un ensemble d'éléments de circuit de collecte des données (129).

34. Système selon la revendication 33, dont l'ensemble d'éléments de circuit de collecte des données comporte un ensemble d'éléments de circuit de lecture des données.

35. Système selon la revendication 33 ou 34, dont l'ensemble d'éléments de circuit de collecte des données est disposé dans l'un de la pluralité des modules de communication.

36. Système selon l'une ou l'autre des revendication 27 à 35, dont le premier ensemble d'éléments de traitement comporte un premier microprocesseur.

37. Système selon la revendication 36, dont le premier microprocesseur fonctionne de façon sélective pour effectuer les opérations de traitement des données.

38. Système selon la revendication 36 ou 37, dont le premier microprocesseur comporte un deuxième microprocesseur.

39. Système selon la revendication 38, dont le deuxième microprocesseur met en fonction le premier microprocesseur pour effectuer les opérations de traitement des données.

40. Système selon la revendication 38 ou 39, dont les premier et deuxième microprocesseurs fonctionnent selon des régimes d'horloge différents.

41. Système selon l'une ou l'autre des revendications 27 à 37, dont le deuxième bornier de traitement comporte un deuxième microprocesseur.

42. Système selon l'une ou l'autre des revendications 27 à 41, dont les données circulent dans les premier et deuxième ensembles de raccord suivant un protocole uniforme de transfert de données.

43. Système selon l'une ou l'autre des revendications 27 à 42, dont le deuxième bornier se raccorde en communication avec le premier bornier suite à la réception de l'unité sélectionnée de la pluralité de modules interchangeables de communication dans le module de base.

44. Système selon l'une ou l'autre des revendications 27 à 43, dont la combinaison du module de base et du module de communication sélectionné est telle à admettre le fonctionnement sur dispositif portatif.

45. Système selon l'une ou l'autre des revendications 27 à 44, dont le module de base comporte en outre une interface d'utilisateur (18,19).

46. Système selon l'une ou l'autre des revendications 27 à 45, dont le module de base comporte un dispositif d'informatique.

47. Système selon l'une ou l'autre des revendications 27 à 46, ayant en outre une antenne munie d'un équipement de support pivotant.
